# EUROPEAN PATENT SPECIFICATION

(11) **EP 0 457 807 B1**
(45) Date of publication and mention of the grant of the patent: **23.07.1997**
(21) Application number: 90902983.7
(22) Date of filing: 07.02.1990
(51) Int. Cl.: H03K 3/017, H02M 7/5395, H02M 7/5387, H03F 3/217

(54) **WAVEFORM GENERATION AND CONTROL**
WELLENFORMERZEUGUNG UND -STEUERUNG
CREATION ET REGULATION DE FORMES D'ONDES

(30) Priority: 09.02.1989 AU 2680/89
(43) Date of publication of application: 27.11.1991
(73) Proprietor: SIEMENS LTD., Richmond, VIC 3121 (AU)
(72) Inventor: BUTLER, Dale, John, Woodbrook Via Castlemaine, VIC 3450 (AU)
(74) Representative: Fuchs, Franz-Josef, Dr.-Ing.
(86) International application number: AU9000045
(87) International publication number: WO9009704

(56) References cited:
- EP-A- 0 172 737
- EP-A- 0 218 414
- WO-A-85/04293
- AU-A- 3 276 878
- AU-A- 5 221 379
- AU-A- 5 681 480
- AU-A- 6 293 586
- AU-B- 3 777 885
- GB-A- 1 152 144
- GB-A- 2 030 803
- US-A- 3 579 132
- US-A- 3 629 616
- US-A- 3 963 944
- US-A- 4 587 605

## Description

The present invention relates to an inverter circuit for generating a sinusoidal waveform from a DC supply.

In relation to inverters, such circuits are required at remote locations where an AC main supply is not available. The generally preferred method of supplying a mains frequency AC supply under such circumstances is to store energy in a battery, whether the energy is derived from solar cells, wind power generators, diesel generator sets, or the like, and then invert the DC voltage of the battery into the necessary AC voltage.

It is necessary that the inverter be of relatively low cost and also be able to handle substantial amounts of power, typically of the order of a kilowatt or more.

One prior art method of achieving this object is to generate a square wave having a pulse repetition rate equal to the desired AC frequency, and then filter the waveform so as to remove particularly the higher frequency harmonics. Whilst this produces a result, many white goods manufacturers and the manufacturers of other small electrical appliances, will not guarantee the operation of their appliances where the supply is derived in this wave from a square wave.
Accordingly, this approach has a limited appeal to the consumer.

In addition to filtering a square wave having a pulse repetition rate equal to the intended frequency of the desired sine wave, various other techniques have been used to generate sine waves. One of these is disclosed in Australian Patent Application No. 56814/80 which discloses the generation of a pseudo-sinusoidal signal by means of generating time to pulses each of the same duration by dividing the output of a high frequency clock, and combining the pulses in accordance with a staggered phase relationship in order to produce a stepped waveform which is approximately sinusoidal. Australian Patent Specification No. 53018/79 discloses a similar arrangement save that the fundamental frequency of the pseudo-sinusoidal waveform is selectable between two different frequencies.

From the document US-A-4,587,605 an Inverter-Drive Controlling Apparatus according to the preamble of claim 1 is known. The document describes in general a method of generating a predetermind voltage comprising the step of determining the magnitude of a predetermined waveform at each of a series of equally spaced time intervals without generating an internal reference waveform. The magnitudes are determined using an algorithm. A series of pulses is generated each of which corresponds to one of said time intervals, each of said series of pulses being pulse width modulated in accordance with the determined magnitude of the waveform at the corresponding time interval. Said pulse width modulated pulses are applied to the inputs of a four quadrant switch means to generate said predetermined waveform at the output of said four quadrant switch means.

In the document EP-A-0 218 414 a Static Inverter is described, comprising a waveform synthesizer and a PWM switchmode regulator. The inverter circuit generates a sinusoidal waveform from a DC supply. The circuit further comprises, a memory to store a representation of said sinusoidal waveform, an oscillator clocking said memory, and a four quadrant switching circuit supplied by said DC supply.

The output signal from the synthesizer according to EP-A-0 218 414 is a 400 Hz full wave rectified sinusoidal signal, which represents one whole cycle. Thus the synthesizer output is not determined by an intimate relation with a driving clock or oscillator, and does not therefore directly store a representation of the intended relative magnitude of the sinusoidal waveform.

It is one object of the present invention to provide a method of generating a waveform which will overcome the abovementioned consumer appeal problem inherent with square wave inverters.

### SUMMARY OF THE INVENTION

According to the present invention there is disclosed an inverter circuit for generating a sinusoidal waveform from a DC supply, said circuit comprising a memory to store a representation of the intended relative magnitude of said sinusoidal waveform at each of n equally spaced time intervals, an oscillator clocking said memory, and a four quadrant switching circuit supplied by said DC supply and providing said sinusoidal waveform, and characterised in that the frequency of said oscillator is 4nf Hertz, where f is the desired frequency of the sinusoidal waveform, and said representations for the n time intervals correspond to a quarter cycle of said sinusoidal waveform, and in that the inverter circuit comprises means adapted to connect the output of said memory to a monostable circuit and to sequentially apply said representation of each of the n time intervals in a count-up then count-down order for each consecutive half cycle of said sinusoidal waveform to control the pulse width of the signal generated at the output of the monostable circuit so that the pulse width of each pulse generated by the monostable circuit is modulated in accordance with the corresponding representation, said monostable circuit output being connected to control terminals of said four quadrant switching circuit, and switching means connected with said memory means and said four quadrant switching circuit operable to detect the end of each consecutive half cycle to switch polarity of said four quadrant switching circuit at the commencement of a next half cycle.

### BRIEF DESCRIPTION OF THE DRAWINGS

Three embodiments of the present invention will now be described with reference to the drawings in which:
Fig. 1 is a circuit diagram of the preferred inverter circuit of the present invention,
Fig. 2 is a circuit diagram of another inverter circuit in which the predetermined magnitude of the output waveform is stored in a read only memory (ROM),
Fig. 3 is a circuit similar to Fig. 2 but in which a different control circuit is provided, and
Fig. 4 is a schematic block diagram of an amplifier circuit.

### BEST MODE OF CARRYING OUT THE INVENTION

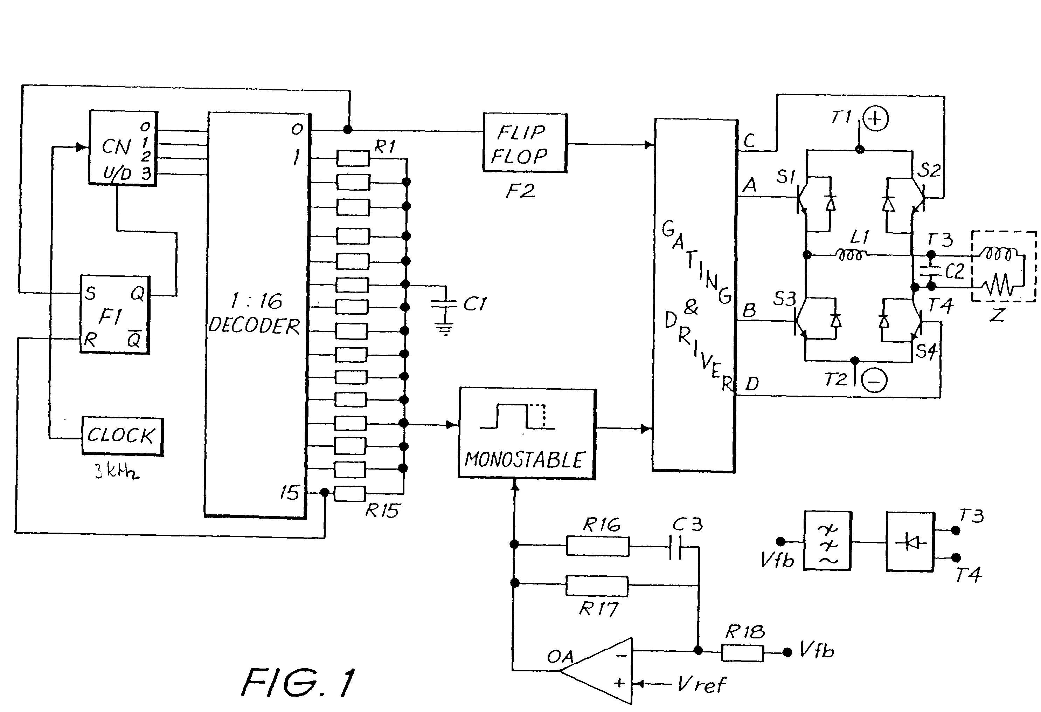

As seen in Fig. 1, a conventional clock which has a pulse repetition rate of 3kHz drives an up down counter CN the output of which is supplied to a 1:16 decoder. Whether the counter CN counts up or down is controlled by an RS flip-flop having its inputs connected to the 0 and 15 output lines of the 1:16 decoder.

The outputs 1-15 of the 1:16 decoder are each connected via a respective resistor R1-R15 to a common line which forms the input to a monostable of adjustable pulse width. Each of the resistors R1 to R15 inclusive has a value which represents the magnitude of one quarter or quadrant of a sine wave. Since it is the relative magnitudes of the resistors R1-R15 which is important rather than their absolute magnitudes, the resistors R1-R15 are easily fabricated using thick film techniques.

The output of the monostable which constitutes a pulse of variable width, is supplied to a gating and driver circuit which provides four outputs A-D which are respectively connected to the control terminal of four corresponding switches S1-S4. Although in this embodiment the switches S1-S4 are each realized by an NPN transistor and a protection counter-poled diode, other switching devices such as power fets or thyristors could be used.

The switches S1-S4 together constitute a four quadrant switch having input terminals T1 and T2 which are respectively connected to the positive and negative terminals of a battery supply (not illustrated). The output terminals T3 and T4 of the four quadrant switch are connected to a load impedance Z which typically is reactive including both resistive and inductive elements. Inductor L1 and capacitor L2 constitute a simple filtering circuit.

As illustrated in Fig. 1, an operational amplifier OA is provided having one terminal connected to a reference voltage Vref and having the other input terminal connected to a feedback voltage Vfb. The output of the comparator is connected to a control input of the monostable. As indicated schematically in Fig. 1, the feedback Vfb can be derived from the output terminals T3 and T4 of the four quadrant switch by rectification and filtering so as to generate a feedback voltage Vfb which is representative of the amplitude of the sine wave appearing at the output terminals T3 and T4.

The operation of the circuit of Fig. 1 is as follows. At a rate determined by the clock, the counter CN counts, say, up from 0 to 15. This count when applied to the 1:16 decoder results in each of the resistors R1 to R15 in sequence being connected to the input of the monostable as a current source. At count 15, the SR flip-flop is reset thereby causing the counter CN to count downwardly from 15 to 0. This results in each of the resistors R15 to R1 in turn being connected as a current source to the input of the monostable. When count 0 is reached, the SR flip-flop is set thereby causing the counter CN to recommence counting upwards once again. Simultaneously, the zero output of the 1:16 decoder is used to trigger the flip-flop F2 in order to switch the gating circuit at the conclusion of the first and second, say, positive quadrants of the desired sine wave and commence the third and fourth negative quadrants.

It will be appreciated that the pulse produced by the monostable is pulse width modulated in accordance with the predetermined relative resistor values R1-R16. As a consequence, the time during which the switches S1-S4 are open is controlled by the duration of the monostable pulse. This time directly reflects the desired magnitude of the sinusoidal waveform to be created and it is reflected in the control duty cycle of the switches S1-S4.

Since each quadrant of the desired 50Hz sinusoidal waveform is divided into 15 time intervals, and there are four such quadrants, this requires a total of 60 time intervals in one cycle of the sinusoidal waveform. Accordingly, the clock frequency is 60 x 50 = 3kHz.

The feedback provided by the operational amplifier OA adjusts the overall gain of the monostable and thus does not effect the relative proportion of the output waveform, but rather the absolute magnitude of the peak voltage. It will also be apparent analogue control voltages do not have to be converted to digital representations in order to enable feedback to be implemented. This is because the digital to analogue aspects represented by resistors R1-R15 are outside the feedback loop and therefore do not introduce any feedback delay.

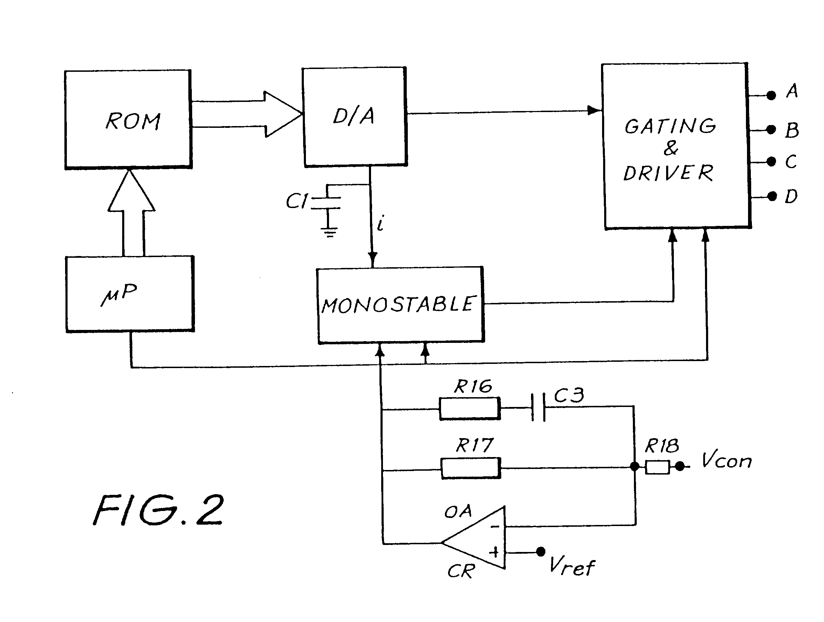

It will be apparent to those skilled in the art that the resistors R1 to R15 constitute a non-volatile, permanent memory source in the form of a digital representation of the desired analogue waveform, in this particular embodiment one quadrant of a waveform which is symmetric both with respect to time and to zero magnitude (polarity). Accordingly, this digitized information could also be stored in a read only memory (ROM) which is operated under microprocessor (uP) control as indicated in Fig. 2. In the circuit of Fig. 2, the data stored in the ROM is sequentially read out to the digital to analogue converter (D/A) in order to provide an analogue input to the monostable as before. An output from the D to A converter is used to control the sequence of the gating and driver circuit as before. The microprocessor provides timing and control signals to both the monostable and the gating and driver circuits.

As before, the output of the operational amplifier OA is used to control the monostable. The reference voltage Vref is as before and an analogue control voltage Vcon is provided which can be the feedback voltage Vfb of Fig. 1, or some other control voltage if desired.

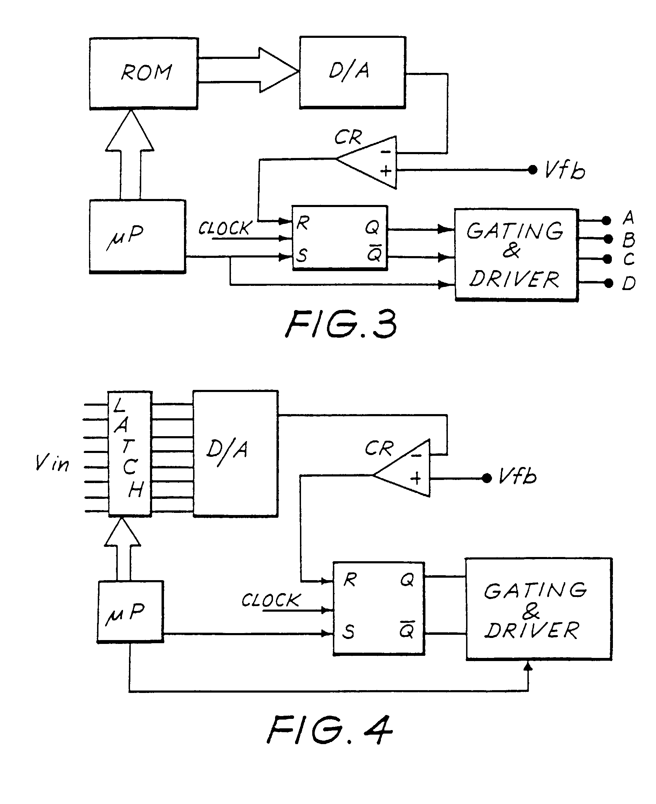

Fig. 3 represents a variation on the arrangement of Fig. 1. The predetermined sequence of magnitudes of the waveform to be generated are stored within the ROM as before and read out under microprocessor control to the D/A converter as before. The output of the D to A converter can be regarded as a reference voltage which is compared in comparator CR against a feedback voltage Vfb derived from the ultimate output. This sampled output voltage is compared with the reference voltage such that when the output voltage is greater than or equal to the reference voltage, then the output of the comparator changes in order to reset the RS flip-flop used to realize the monostable. The RS flip-flop is set by the microprocessor and is clocked at the necessary clock frequency as explained above in relation to Fig. 1. The operation of this circuit is somewnat reminiscent of a conventional delta modulator, however, the arrangement is greatly simplified since the generation of analogue, sine and triangle waves is not required.

Fig. 4 illustrates the schematic circuit of an amplifier in which a digital input voltage Vin (for example from a CD player or vibration tester) is applied to a latch having an output connected to a digital to analogue converter (D/A) the output of which is applied to the comparator CR. The comparator output is in turn is applied to an RS flip-flop and thence the gating and driver circuit as in Fig. 3. Thus the four quadrant switch S1-S4 is operated so as to generate at the output terminals T3-T4 an accurate amplified representation of the input voltage making use of the power supplied to the switch S1-S4 via the terminals T1-T2.

The foregoing describes only some embodiments of the present invention and modifications, obvious to those skilled in the art, can be made thereto without departing from the scope of the present invention as defined in the appended claims.

For example, the four quadrant switch S1-S4 is reversible in the sense that alternating current can be input on terminals T3 and T4 and converted to direct current and fed to the battery (not illustrated) or other DC supply in a controlled manner provided that the peak voltage of the AC input is less than the magnitude of the DC supply.

## Claims

1. An inverter circuit for generating a sinusoidal waveform from a DC supply, said circuit comprising a memory (R1, R15, ROM) to store a representation of the intended relative magnitude of said sinusoidal waveform at each of n equally spaced time intervals, an oscillator (CLOCK, CN, F1, µP) clocking said memory, and a four quadrant switching circuit (S1-S4) supplied by said DC supply and providing said sinusoidal waveform, and characterized in that the frequency of said oscillator is 4nf Hertz, where f is the desired frequency of the sinusoidal waveform and said representations for the n time intervals correspond to a quarter cycle of said sinusoidal waveform, and in that the inverter circuit comprises means adapted to connect the output of said memory (R1, R15, ROM) to a monostable circuit and to sequentially apply said representation of each of the n time intervals in a count-up then count-down order for each consecutive half cycle of said sinusoidal waveform to control the pulse width of the signal generated at the output of the monostable circuit so that the pulse width of each pulse generated by the monostable circuit is modulated in accordance with the corresponding representation, said monostable circuit output being connected to control terminals of said four quadrant switching circuit (S1-S4), and switching means connected with said memory means (R1, R15, ROM) and said four quadrant switching circuit (S1-S4) operable to detect the end of each consecutive half cycle to switch polarity of said four quadrant switching circuit (S1-S4) at the commencement of a next half cycle.

2. An inverter circuit as claimed in claim 1, wherein said memory comprises a resistive array (R1-R15) , each resistor of which is connected to the corresponding output of a sequential counter (CN).

3. An inverter circuit as claimed in claim 1, wherein said memory comprises a digital memory (ROM) outputable to a digital to analogue converter (D/A).

4. An inverter circuit as claimed in any one of claims 1, 2 or 3, further comprising a feedback voltage magnitude control circuit including a comparator (OA) receiving a rectified representation of said sinusoidal waveform and a reference voltage as inputs, the output of said comparator (OA) being connected to said monostable circuit to regulate the output voltage level of each square wave output of the monostable circuit.

## Patentansprüche

1. Wechselrichterschaltung zur Erzeugung einer Sinuswellenform von einer Gleichstromversorgung, wobei die besagte Schaltung einen Speicher (R1, R15, ROM) zum Speichern einer Darstellung der relativen Sollgröße der besagten Sinuswellenform in jedem von n gleich beabstandeten Zeitabständen, einen den besagten Speicher taktenden Oszillator (TAKT, CN, F1 µP) und ein durch die besagte Gleichstromversorgung versorgtes und die besagte Sinuswellenformbereitstellendes Vierquadrantenschaltnetz (S1-S4) umfaßt und dadurch gekennzeichnet ist, daß die Frequenz des besagten Oszillators 4nf Hertz beträgt, wobei f die gewünschte Frequenz der Sinuswellenform ist und die besagten Darstellungen für die n Zeitabstände einem Viertel Zyklus der besagten Sinuswellenform entsprechen und daß die Wechselrichterschaltung Mittel umfaßt, die zum Anschalten des besagten Speichers (R1-R15, ROM) an eine monostabile Schaltung und zum sequentiellen Anlegen der besagten Darstellung jedes der n Zeitabstände in einer Vorwärts- und danach Rückwärtszählreihenfolge für jeden aufeinanderfolgenden Halbzyklus der besagten Sinuswellenform zur Steuerung der Impulsbreite des am Ausgang der monostabilen Schaltung erzeugten Signals geeignet ist, so daß die Impulsbreite jedes durch die monostabile Schaltung erzeugten Impulses entsprechend der entsprechenden Darstellung moduliert wird, wobei der Ausgang der besagten monostabilen Schaltung mit Steueranschlüssen des besagten Vierquadrantenschaltnetzes (S1-S4) verbunden ist und Schaltmittel mit dem besagten Speichermittel (R1-R15, ROM) verbunden sind und das besagte Vierquadrantenschaltnetz (S1-S4) zur Erkennung des Endes jedes aufeinanderfolgenden Halbzyklus zum Umschalten der Polarität des besagten Vierquadrantenschaltnetzes (S1-S4) zu Beginn eines nächsten Halbzyklus betätigt werden kann.

2. Wechselrichterschaltung nach Anspruch 1, wobei der besagte Speicher eine Widerstandsanordnung (R1-R15) umfaßt, bei der jeder Widerstand mit dem entsprechenden Ausgang eines sequentiellen Zählers (CN) verbunden ist.

3. Wechselrichterschaltung nach Anspruch 1, wobei der besagte Speicher einen Digitalspeicher (ROM) umfaßt, dessen Ausgabe mit einem Digital/Analogwandler (D/A) verbindbar ist.

4. Wechselrichterschaltung nach einem der Ansprüche 1, 2 oder 3, weiterhin mit einer Rückkopplungsspannungs-Größensteuerungsschaltung mit einem Vergleicher (OA), der eine gleichgerichtete Darstellung der besagten Sinuswellenform und eine Bezugsspannung als Eingaben empfängt, wobei der Ausgang des besagten Vergleichers (OA) mit der besagten monostabilen Schaltung verbunden ist, um den Ausgangsspannungspegel jeder Rechteckwellenausgabe der monostabilen Schaltung zu regeln.

## Revendications

1. Circuit onduleur pour générer une forme d'onde sinusoïdale à partir d'une alimentation à courant continu, ledit circuit comprenant une mémoire (R1, R15, ROM) pour stocker une représentation de la grandeur relative prévue de ladite forme d'onde sinusoïdale à chacun des n intervalles de temps équidistants, un oscillateur (HORLOGE, CN, F1, µP) synchronisant ladite mémoire, et un circuit de commutation à quatre quadrants (S1 à S4) alimenté par ladite alimentation à courant continu et fournissant ladite forme d'onde sinusoïdale, et caractérisé en ce que la fréquence dudit oscillateur est de 4nf hertz, où f est la fréquence désirée de la forme d'onde sinusoïdale, et lesdites représentations pour les n intervalles de temps correspondent à un quart de cycle de ladite forme d'onde sinusoïdale, et en ce que le circuit onduleur comprend des moyens adaptés pour raccorder la sortie de ladite mémoire (R1, R15, ROM) à un circuit monostable et pour appliquer séquentiellement ladite représentation de chacun des n intervalles de temps dans un ordre de comptage puis de décomptage pour chaque demi-cycle consécutif de ladite forme d'onde sinusoïdale afin de commander la largeur d'impulsion du signal généré à la sortie du circuit monostable, de telle sorte que la largeur d'impulsion de chaque impulsion générée par le circuit monostable soit modulée conformément à la représentation correspondante, ladite sortie du circuit monostable étant raccordée aux broches de commande dudit circuit de commutation à quatre quadrants (S1 à S4), et le moyen de commutation raccordé audit moyen de mémoire (R1, R15, ROM) et ledit circuit de commutation à quatre quadrants (S1 à S4) prêt à fonctionner pour détecter la fin de chaque demi-cycle consécutif pour commuter la polarité dudit circuit de commutation à quatre quadrants au début d'un demi-cycle suivant.

2. Circuit onduleur selon la revendication 1, dans lequel ladite mémoire comprend un réseau résistif (R1 à R15), dont chaque résistance est raccordée à la sortie correspondante d'un compteur séquentiel (CN).

3. Circuit onduleur selon la revendication 1, dans lequel ladite mémoire comprend une mémoire numérique (ROM) dont la sortie peut être appliquée à un convertisseur numérique/analogique (N/A).

4. Circuit onduleur selon l'une quelconque des revendications 1, 2 ou 3, comprenant en outre un circuit de commande de grandeur de tension de rétroaction comprenant un comparateur (OA) recevant une représentation redressée de ladite forme d'onde sinusoïdale et une tension de référence comme entrées, la sortie dudit comparateur (OA) étant raccordée audit circuit monostable afin de réguler le niveau de tension de sortie de chaque sortie à signal carré du circuit monostable.
